# EUROPÄISCHE PATENTSCHRIFT

(11) **EP 1 620 252 B1**
(45) Veröffentlichungstag und Bekanntmachung des Hinweises auf die Patenterteilung: **12.08.2015**
(21) Anmeldenummer: 04728172.0
(22) Anmeldetag: 19.04.2004
(51) Int. Cl.: B02C 18/18, B02C 19/00, B29B 17/00, B30B 9/32, B02C 18/14

(54) **VORRICHTUNG ZUM ZUSAMMENDRÜCKEN LEERER BEHÄLTER SOWIE VERFAHREN HIERZU**
DEVICE FOR PRESSING EMPTY CONTAINERS TOGETHER AND METHOD THEREFOR
DISPOSITIF POUR COMPRIMER DES RECIPIENTS VIDES ET PROCEDE CORRESPONDANT

(30) Priorität: 27.04.2003 DE 10320509; 26.05.2003 DE 10325368; 13.11.2003 DE 10353188
(43) Veröffentlichungstag der Anmeldung: 01.02.2006
(60) Teilanmeldung: 10012782.8
(73) Patentinhaber: Schwelling, Hermann, 88682 Salem (DE)
(72) Erfinder: Schwelling, Hermann, 88682 Salem (DE)
(74) Vertreter: Fürst, Siegfried
(86) Internationale Anmeldenummer: PCT/EP2004/004120
(87) Internationale Veröffentlichungsnummer: WO 2004/096532

(56) Entgegenhaltungen:
- US-A- 4 691 871
- PATENT ABSTRACTS OF JAPAN Bd. 1998, Nr. 04, 31. März 1998 (1998-03-31) & JP 09 313972 A (RYOBI LTD), 9. Dezember 1997 (1997-12-09)
- PATENT ABSTRACTS OF JAPAN Bd. 1999, Nr. 05, 31. Mai 1999 (1999-05-31) & JP 11 033790 A (WADA KINZOKU KOGYO KK), 9. Februar 1999 (1999-02-09)
- PATENT ABSTRACTS OF JAPAN Bd. 2000, Nr. 07, 29. September 2000 (2000-09-29) & JP 2000 117130 A (AKUTO GIKEN KK), 25. April 2000 (2000-04-25)

## Beschreibung

Die Erfindung betrifft eine Vorrichtung nebst einem Verfahren zum Zusammendrücken leerer Behälter, insbesondere Getränkeflaschen oder -dosen u.ä. Abfallmaterialien, nach dem Oberbegriff des Patentanspruches 1.
Derartige Vorrichtungen werden verwendet, um leere Behälter, insbesondere solche aus dem Lebensmittelbereich, wie Getränkeflaschen, Dosen u.ä. Behältnisse, zu kompaktieren, für den Transport zu den Recyclinganlagen hin bzw. für den Recyclingprozess selbst.

Bekannt sind zum einen Vorrichtungen die nach dem Prinzip der Plattenpressung arbeiten und zum anderen solche, deren Presseinheit/-en Walzen enthalten. Diese Vorrichtungen sind entweder für die Aufbereitung von Kunststoffbehältern oder von Weißblech-Behältern/-dosen optimiert.
Da besagtes Abfallgut in nicht unbedeutender Anzahl auch verschlossene Behälter enthalten kann, ist der/den Presseinrichtung/-en dieser Vorrichtungen oft ein Perforator vorangestellt, z.B. ein Perforator nach der DE 43 38 561 A1 oder der US 5,642,661 A.

Damit der technische Aufwand bei diesen Vorrichtungen verringert werden kann, sind auch Vorrichtungen bekannt, bei denen an Pressteilen der/den Presseinrichtung/-en Mittel zum Perforieren vorgesehen sind, z.B. bei einer Vorrichtung zum Kompaktieren von leeren Getränkebehältern nach der DE 100 55 201 A1. Diese Vorrichtung besitzt eine sich im Wesentlichen trichterförmig verjüngende Förderstrecke, in welche die Getränkebehälter einlaufen und unter der Wirkung von die Förderstrecke seitlich begrenzenden Einrichtungen zum Fördern und Zusammenpressen sukzessiv kompaktiert werden.
Zudem ist dort vorgesehen, dass die Walzen mit auf ihrem Umfang verteilten, schneidenförmigen Erhöhungen, die sich über die Länge der Walzen, also parallel zur deren Rotationsachse, erstrecken, ausgestattet sind. Weiterhin und insbesondere bestehen die Einrichtungen zum Fördern und Zusammenpressen der Getränkebehälter bei dieser Vorrichtung aus mit Trommelmotoren angetriebenen Walzen.
Diese Vorrichtung ist vor allem wegen den letztgenannten Baugruppen teuer und wartungsintensiv.
Ein weiterer Nachteil ist gegeben, wenn der Abstand der paarweise angeordneten Walzen, insbesondere die mit dem geringsten AchsAbstand, bezüglich ihres Abstandes und der Lage der längs gerichteten Schneiden nicht genau justiert ist. Dann erfolgt eine Trennung des hindurch geführten Materials, so dass jeweils aus einer Flasche oder Dose kleinere Stücke entstehen. Solche Klein- und Kleinststücke lassen sich, wenn überhaupt, sehr schlecht zu Ballen weiterverarbeiten; für deren Transport sind dann weitere Behälter notwendig. Das Dokument JP-A-09313972 offenbart eine Vorrichtung gemäss dem Oberbegriff des Anspruchs 1.

Ausgehend von diesem Stand der Technik ist der Fachmann vor die Aufgabe gestellt, eine Vorrichtung zum Zusammendrücken leerer Behälter, insbesondere Getränkeflaschen bzw. Getränkedosen aus Kunststoff, insbesondere PET-Flaschen, oder Weißblech, derart zu gestalten, dass das Zusammendrücken zuverlässig gewährleistet ist sowie die Fertigungskosten und der Wartungsaufwand für diese Vorrichtung gegenüber bekannten Vorrichtungen gemindert werden kann, zudem wird eine Verfahrensverbesserung gesucht.

Erfindungsgemäß wird diese Aufgabe durch eine Vorrichtung zum Zusammendrücken leerer Behältern mit den Merkmalen des Patentanspruchs 1 gelöst; vorteilhafte Weiterbildungen und Ausgestaltungen der Erfindung sind Gegenstand der abhängigen Vorrichtungsansprüche sowie der Verfahrensansprüche.

Der Kerngedanke der Erfindung besteht darin, dass mit der neuen Vorrichtung mit nur einem Walzenpaar besagte Behälter nahezu zeitgleich perforiert und zusammengedrückt werden. Die Mittel zum Perforieren sind derart ausgebildet und an jeder der beiden (Press-) Walzen angeordnet, bevorzugt in selbige integriert, insbesondere Bestandteil von deren Körper selbst, dass verfahrensmäßig während des abschnittsweisen Durchtrennen des verflachten Materials und/oder unmittelbar folgend, quasi in der Endphase eines solchen Schnittes, eingeschnittene Wandabschnitte der aneinander gepressten Wandabschnitte eines Behälters miteinander verhaken. Hiermit wird dem Expansionsbestreben des Behälters nach dem Pressen, welches von dessen ursprünglicher Körperform, den Elastizitätswerten des Behältermaterials und dem Pressvorgang bestimmt ist, entgegen gewirkt.

Weiterhin sind an wenigstens einer der Walzen der neuen Vorrichtung die Mittel zum Zusammendrücken derart geformt und in deren Lage zu den Mitteln zum Zusammendrücken an der im Wesentlichen parallel gegenüberliegend positionierten Walze angeordnet, dass die Außenfläche des Behälters, in Querrichtung zu dessen Förderrichtung gesehen, zumindest abschnittsweise angeschnitten bzw. wenigstens angeritzt ist. Mithin werden dort vorhandene Spannungen im Material gelöst und somit Expansionsbestrebungen des Behälters nach dem Zusammendrücken ebenfalls entgegen gewirkt.

Zudem wird durch die neue Vorrichtung das Aufbereiten von Behältern aus Kunststoff, insbesondere PET-Material, und von Behältern aus Weißblech in besagter Art und Weise, ohne zusätzliche Einstellungen an der Vorrichtung, unmittelbar nacheinanderfolgend ermöglicht.

Die neue Vorrichtung zum Zusammendrücken leerer Behälter, insbesondere von Getränkeflaschen oder -dosen aus Kunststoff oder Weißblech besteht aus einem eine Einfüllöffnung sowie eine Ausgangsöffnung (Auslassöffnung) aufweisenden Gehäuse und eine im Gehäuse angeordnete Schneid- und Presseinheit. Weiterhin sind Mittel zum Antrieb und zur Steuerung der Schneid- und Presseinheit vorgesehen, wobei die Schneid- und Presseinheit wenigstens zwei, bezüglich ihren Drehachsen mit Abstand zueinander angeordnete Walzen enthält. Jede der beiden Walzen weist mehrere, mit axialem Abstand zueinander angeordnete Scheiben, die Arbeitsscheiben, auf.

Im Speziellen ist an dieser Schneid- und Presseinheit vorgesehen, dass jede Walze, in Längsrichtung ihrer Drehachse gesehen, zwei Arten von mehreren Abschnitten aufweist, wobei wenigstens ein Abschnitt dieser nacheinander im Wechsel folgenden Abschnitte eine oder mehrere, axial beabstandete, Scheiben besitzt und wobei diese nacheinander folgenden Abschnitte jeweils einen anderen äußeren Durchmesser besitzen, und, im montierten Zustand der beiden Walzen, wenigstens die den größeren äußeren Durchmesser aufweisenden Abschnitte zueinander versetzt und mit ihren Umfangsflächen teilweise kämmend (überlappend) nebeneinander angeordnet sind und somit jeweils eine Schneidscheibe bilden. In dieser Schneidscheiben ist wenigstens eine Nut in deren Umfangsfläche vorgesehen, die beide Schneidscheibenflanken durchsetzt.

Bevorzugt ist die Länge der Abschnitte mit dem größeren Durchmesser geringer, als die Länge der Abschnitte, die eine oder mehrere Scheiben mit kleinerem Durchmesser besitzen. Der Durchmesser der größeren Scheiben beträgt vorzugsweise 79 mm, der Durchmesser der längeren Abschnitte - der Pressbereiche - 70 mm und der Kerndurchmesser der Walzen 50 mm.

Zudem besitzen die den kleineren äußeren Durchmesser aufweisenden Abschnitte mehrere radial nach innen gerichtete, bis zu einem Kerndurchmesser reichende Einstiche derart, dass mehrere Druckscheiben gebildet sind, die jeweils mit der Breite des Einstiches zueinander beabstandet sind.
**Bevorzugt ist in wenigstens einer dieser Druckscheiben wenigstens eine Nut in deren Umfangsfläche vorgesehen; wobei jede vorgesehene Nut beide Flanken der betreffenden Druckscheibe durchsetzt.**

Da mit der neuen Vorrichtung zum Zusammendrücken leerer Behälter sowohl Getränkeflaschen bzw. Getränkedosen aus Kunststoff, insbesondere PET-Flaschen, als auch aus Weißblech bestehende Behälter zuverlässig zusammendrückbar sein sollen, sind die zu erfüllenden Anforderungen auch vielfach. Bei den Tätigkeiten zur Problemlösung - den theoretischen Betrachtungen und den praktischen Versuchen - hat sich herausgestellt, dass nicht nur die Gestaltung (Form) und die Anzahl der Schneidscheiben an sich wichtig ist, sondern auch die Bemessung des so genannten Schnittspiels zwischen benachbarten Schneidscheiben und der für die Schneidwalzen verwendete Werkstoff auf die Leistungsparameter einer solchen Vorrichtung einschließlich deren Verfügbarkeit und Wartungsaufwand positiv oder negativ wirken. Eine positive Wirkung wird erreicht, wenn dieses Schnittspiel zwischen benachbarten Scheiben vorzugsweise einen Wert zwischen 0,2 mm und 2 mm hat oder/und die Überlappung benachbarter und gegenüber liegender Scheiben zwischen 0,5 mm und 2,5 mm gewählt ist, bevorzugt 10 % der Breite einer Scheibe.

Die Walzen der Vorrichtung bestehen, bevorzugt, aus dem Werkstoff 42CrMoS4. Die Scheiben der Walzen sind gehärtet und haben maximal eine Härte von 55 HRc.

Nach einer speziellen Ausführung der in der Umfangsfläche der Schneidscheibe bzw. Schneidscheiben angeordneten Nuten bildet die in Umlaufrichtung nacheilende Flanke mit der Umfangsfläche einen in Umlaufrichtung weisenden spitzwinkligen Haken, wobei die an der Spitze beginnende Nutflanke, zumindest abschnittsweise, einen linearen sowie entgegen dem Walzendrehsinn gerichteten Verlauf hat und der daran anschließende Übergangsbereich zum Nutfuss und/oder der in Umlaufrichtung liegenden Nutflanke hin, bogenförmig ausgebildet ist. Bevorzugt verlaufen die beiden Nutflanken zueinander parallel oder divergierend. Der Spitzenwinkel des Hakens ist vorzugsweise zwischen 45° und 80° gewählt.

In weiterer vorzugsweiser Ausführung rotieren die Walzen mit einer Drehzahl von 60 U/min.

Zudem ist bei der neuen Vorrichtung vorgesehen, dass der Schneid- und Presseinheit im Bereich der Einfüllöffnung, die in einer bevorzugten Ausführung einen Vorratsbehälter mit trichterartiger Gestalt umfasst, ein Separator vorgelagert ist. Um eine Drehachse des Separators rotieren Flügel, vorzugsweise drei oder vier Flügel, die Abfallgut in Förderrichtung geordnet der Schneid- und Presseinheit zuführen und zugleich, mindestens bis zum Erfassen der Behälter durch die Schneidscheiben, selbiges in den Einzugsspalt der Schneidund Presseinheit drücken. Oberhalb des Schneidwerkes und hinter dem Separator ist eine der Wände des Trichters weitergeführt bzw. ein plattenartiges Teil angeordnet, zur Begrenzung des Vorratsraumes und als Führungsfläche für die Rückführung von eventuell unter den Flügeln hindurch bzw. mitgeschleiften Behältnissen zum Vorratsraum hin.

Weitere vorteilhafte Konstruktionsdetails bei der neuen Vorrichtung sind die von außen aus in die Lagerplatten eingesetzten Lager für die Walzen. Dies ist von Vorteil, da nicht ausgeschlossen ist, dass zugeführte Behälter verschlossen sind und zudem noch Flüssigkeit enthalten, die wiederum gären kann, sodass in der Flasche ein Druck aufgebaut ist und bei der ersten Perforation diese Flüssigkeit in der Schneid- und Presseinheit unkontrolliert herumspritzt.
Die äußeren Maße der Vorrichtung sind so, dass eine Ankoppelung an Flaschen- und/oder Dosenannahmeautomaten erfolgen kann.

Im folgenden Beschreibungsteil wird die Erfindung anhand von in Zeichnungen schematisch dargestellten vorteilhaften Ausführungsbeispielen näher erläutert. Es zeigen:
- **Figur 1**: eine erfindungsgemäße Vorrichtung in Seitenansicht mit teilweise geöffneter Seitenfläche und Blick auf die Schneidund Presseinheit,
- **Figur 2**: eine schematische Sicht von der Seite auf die beiden Walzen, bei abgenommener vorderen (linken) Lagerplatte,
- **Figur 3**: die erste (vordere) Walze in Draufsicht, ohne Antriebsrad,
- **Figur 3a**: die Lage der beiden Walzen zueinander,
- **Figur 4a**: einen Blick auf die Antriebsseite einer der Walzen,
- **Figur 4b**: eine Stirnansicht zu Figur 4a,
- **Figur 4c**: eine Stirnansicht von Figur 4a ohne die Schneidscheibe,
- **Figur 5**: einen Ausschnitt einer Schneidscheibe mit einer weiteren Variante der Nutgestaltung,
- **Figur 6**: eine weitere Variante des den Walzen vorgeordneten Separators, der zugleich eine Andruckfunktion übernimmt und
- **Figur 7 und 7a**: weitere Varianten der Flügel der in Fig.1 gezeigten Dosier-und Andruckwelle.

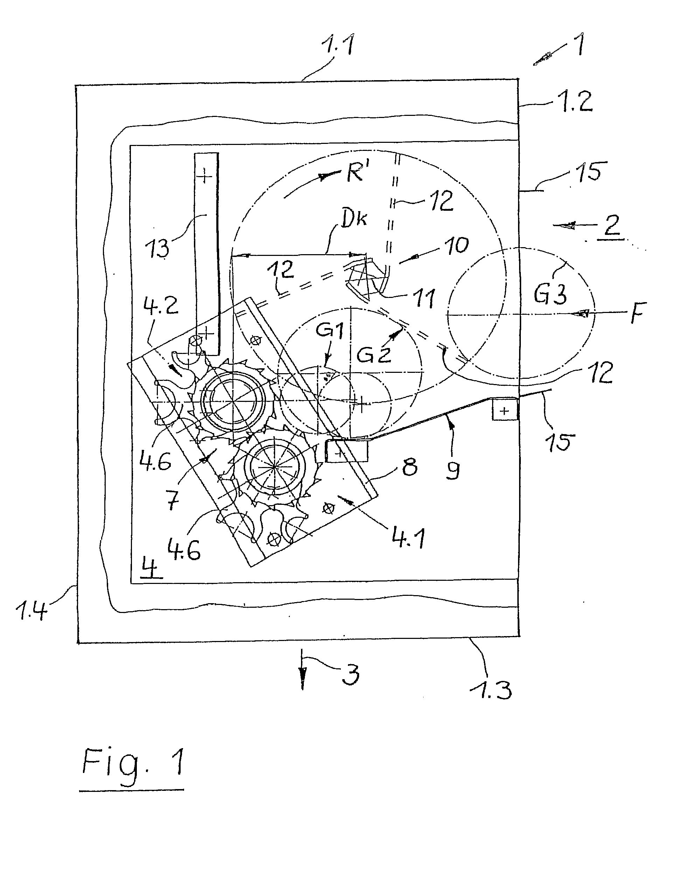

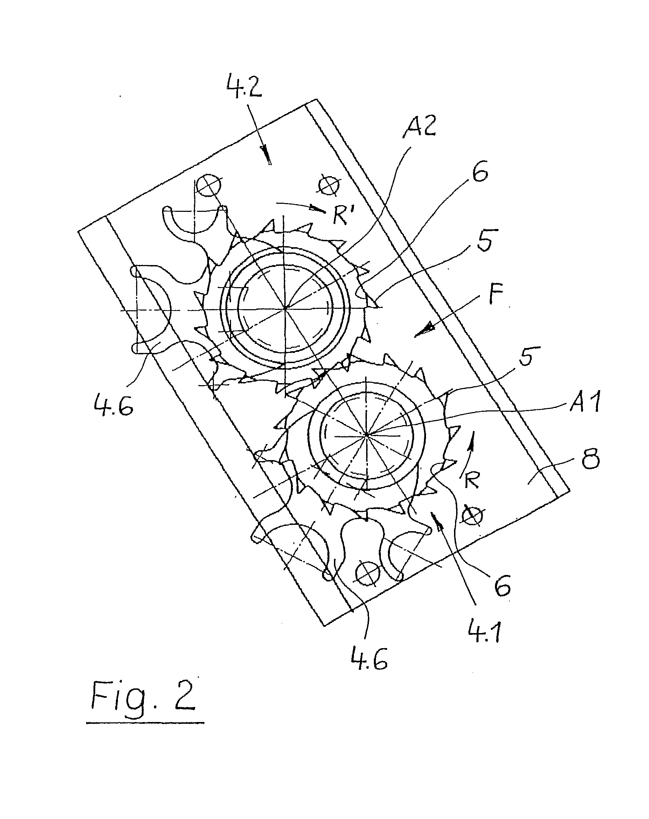

Die neue Vorrichtung zum Zusammendrücken leerer Behälter ist in **Fig. 1** in Seitenansicht mit teilweise geöffneter Seitenfläche und Blick auf die Schneid- und Presseinheit schematisch gezeigt. Die Vorrichtung umfasst ein Gehäuse **1,** mit einer Einfüllöffnung **2** in dessen vorderen Seite **1.2** sowie einer Ausgangsöffnung **3,** auch Auslassöffnung genannt, in dessen unteren Seite **1.3.** und eine im Gehäuse **1** angeordnete Schneid- und Presseinheit **4** sowie, hier nicht gezeigt, Mittel zum Antrieb und zur Steuerung der Schneid- und Presseinheit **4.** Die obere Seite **1.1** und die hintere Seite **1.4** des Gehäuses **1** sind hier im Ausführungsbeispiel geschlossen.
Die Schneid- und Presseinheit **4** enthält zwei bezüglich deren Drehachsen zueinander beabstandet angeordnete Walzen **4.1** und **4.2.** Jede Walze **4.1** und **4.2** weist, in Längsrichtung ihrer Drehachse **A1** bzw. **A2** gesehen, zwei, Abschnitte **S1** und **S2** auf - siehe hierzu **Fig. 2** bis **3a** -, wobei nacheinander im Wechsel folgende Abschnitte jeweils einen anderen äußeren Durchmesser **D1; D2** besitzen, und, im montierten Zustand der beiden Walzen **4.1** und **4.2,** wenigstens die den größeren äußeren Durchmesser **D2** aufweisenden Abschnitte **S2** zueinander versetzt und mit ihren Umfangsflächen teilweise kämmend (überlappend) nebeneinander angeordnet sind und somit Schneidscheiben **5** bilden, deren Umfangsflächen **5.1** jeweils wenigstens eine Nut besitzt.
Von der Unterkante der Einfüllöffnung **2** aus ist zur Schneid- und Presseinheit **4** hin eine Rutsche **9** vorgesehen, auf der die eingegebenen Behälter **G3, G2** oder **G1** rollend oder rutschend zur Einheit **4** gelangen. Oberhalb dieser Rutsche **9** ist ein Separator **10** positioniert, der mit seinen um eine Drehachse **11** rotierenden Flügeln **12,** hier drei, die Behälter **G3, G2** oder **G1** in Förderrichtung F geordnet der Einheit 4 zuführt und zugleich, mindestens bis zum Erfassen der Behälter durch die Schneidscheiben **5,** selbige in den Einzugsspalt der Schneid- und Presseinheit **4** drückt. Mit **Dk** ist der von den Enden der Flügel **12** beschriebene Umfangskreis bezeichnet. Oberhalb der Schneid- und Presseinheit **4** und hinter dem Separator **10** ist ein plattenartiges Rahmenteil **13** zur Begrenzung des Aufnahmeraumes angeordnet. Der Bereich des Austritts der in der Schneid- und Presseinheit **4** aufbereiteten Gegenstände hat das Bezugszeichen **7.**

Die Länge **L2** der Abschnitte **S2** mit dem größeren äußeren Durchmesser **D2** ist geringer, als die Länge **L1** der Abschnitte **S1,** die den kleineren äußeren Durchmesser **D1** besitzen.
Die den kleineren Durchmesser **D1** aufweisenden Abschnitte **S1** besitzen wenigstens zwei radial nach innen gerichtete, bis zu einem Kerndurchmesser **4.3** reichende Einstiche **E** derart, dass mehrere eine Druckscheibe **6** gebildet ist.

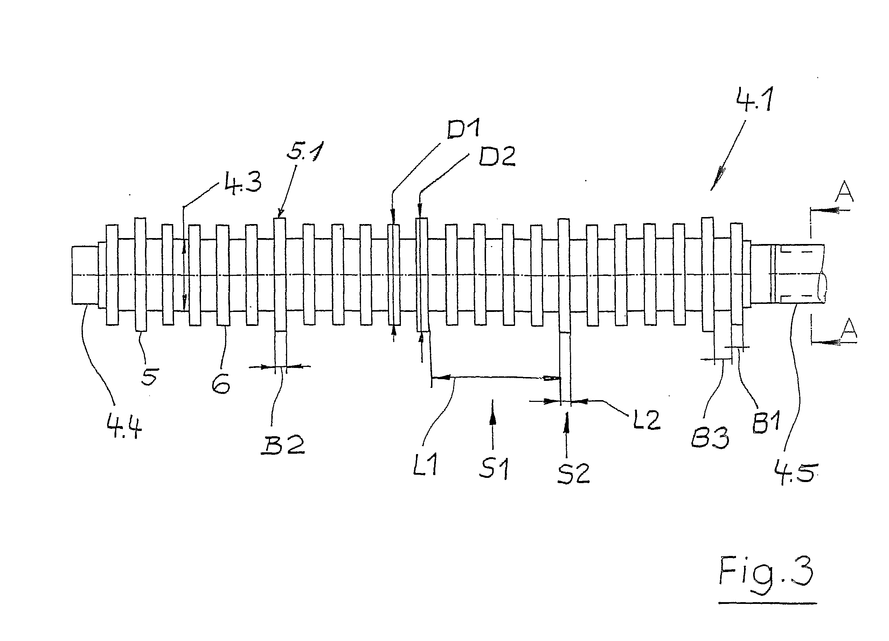

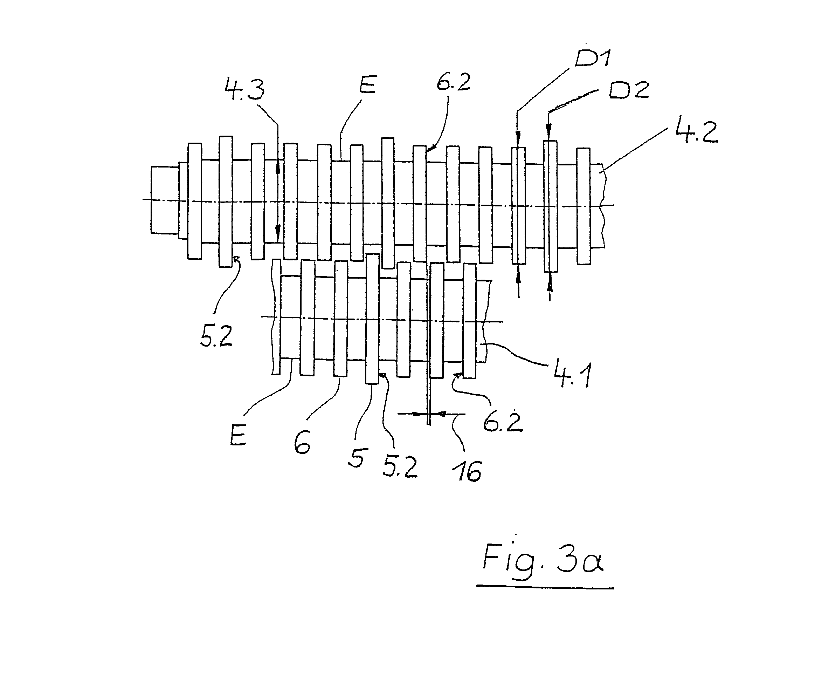

In den Abschnitten **S1,** die den kleineren Durchmesser **D1** aufweisen, sind mehrere Druckscheiben **6** vorgesehen, die jeweils mit der Breite **B3** des Einstiches **E** zueinander beabstandet sind. Das so genannte Schnittspiel **16** zwischen benachbarten Scheiben **6** oder **5** und **6,** also deren Seitenflächen **6.2** bzw. **5.2,** siehe **Fig. 3a****,** hat einen Wert zwischen 0,2 mm und 2 mm.
Mit **B1** ist die Breite der Druckscheiben **6,** mit **B2** die Breite der Schneidscheiben **5** bezeichnet.
Die Überlappung benachbarter und gegenüber liegender Scheiben ist in einem Wertebereich zwischen 0,5 mm und 2,5 mm gewählt, bevorzugt beträgt diese Überlappung 10 % der Breite einer Scheibe 5 bzw. 6.
Die Scheiben der Walzen **4.1** und **4.2** sind gehärtet und besitzen max. eine Härte von 55 HRc.
Der in dieser Figur linke Endbereich der Walze **4.1** ist als Lagerzapfen **4.4** und der rechte Endbereich als Lager-und Antriebszapfen **4.5** geformt.

Bei der in **Fig. 1** und **2** gezeigten Ausführung sind die Lager der Walzen **4.1** und **4.2** von außen aus in die Lagerplatten **8** eingesetzt sowie vorzugsweise zudem nach innen, zum Arbeitsraum hin abgedichtet. Diese Konstruktion ist besonders verschleiß- und wartungsfreundlich.

Details der Abschnitte **S1** und **S2** sowie der Gestaltung der Walzen sind in den **Fig. 3** und **3a** gezeigt. Der Durchmesser **D2** der Abschnitte **S2** beträgt vorzugsweise 79 mm, der Durchmesser **D1** der kleineren Abschnitte **S1** 70 mm und der Kerndurchmesser **4.3** der Walzen **4.1** und **4.2** 50 mm.
Die Drehzahl der Walzen **4.1** und **4.2** der Schneid- und Presseinheit **4** beträgt vorzugsweise 60 U/min. Der Startimpuls für die Walzen **4.1** und **4.2** erfolgt vorzugsweise über eine Lichtschranke, die hier nicht dargestellt ist; zudem wird mit diesem Steuerteil auch eine Nachlaufzeit vorgegeben, so dass stets alle zugeführten Behälter die Schneid-und Presseinheit verlassen. Bei ruhenden Walzen befindet sich somit kein Behälter zwischen selbigen; Verklebungen durch Restinhalte der Behälter und unnötige Belastung der Schneidbereiche der Schneidscheiben werden vermieden.

In den **Fig. 1** und **2** ist noch gezeigt, dass bei dieser Ausführung zwischen den Scheiben **5** und **6** Abstreifer **4.6** angeordnet sind, wobei serienmäßige Abstreifer von Aktenvernichtern Anwendung finden.
Nicht dargestellt sind die im Gehäuse **1** angeordneten Düsen, zur Beaufschlagung der Walzen **4.1** und **4.2** und/oder der Einlass- **2** und der Auslassöffnung **3** mit Desinfektions-und/oder Reinigungsmittel, damit eine durch Flüssigkeitsreste und Umgebungsatmosphäre begünstigte Geruchsbildung (Bakterienbildung) unterbunden werden kann.

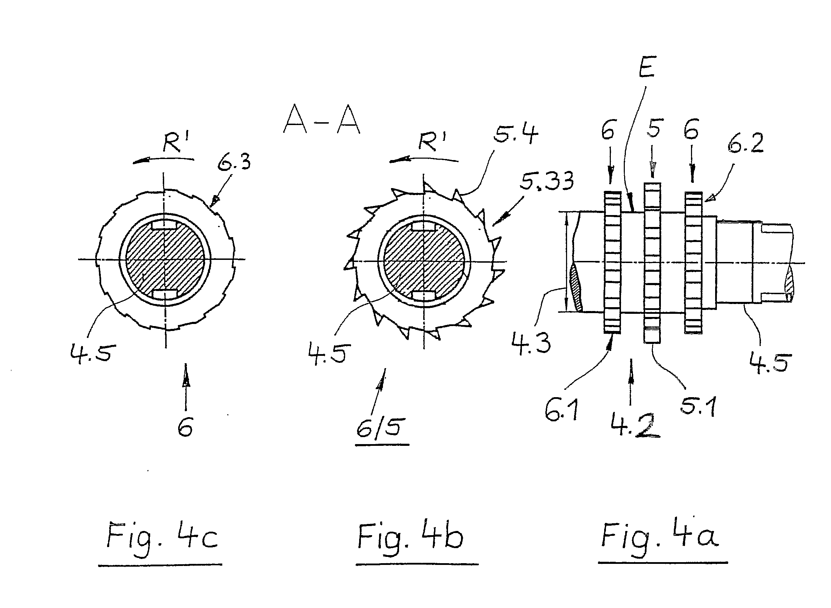

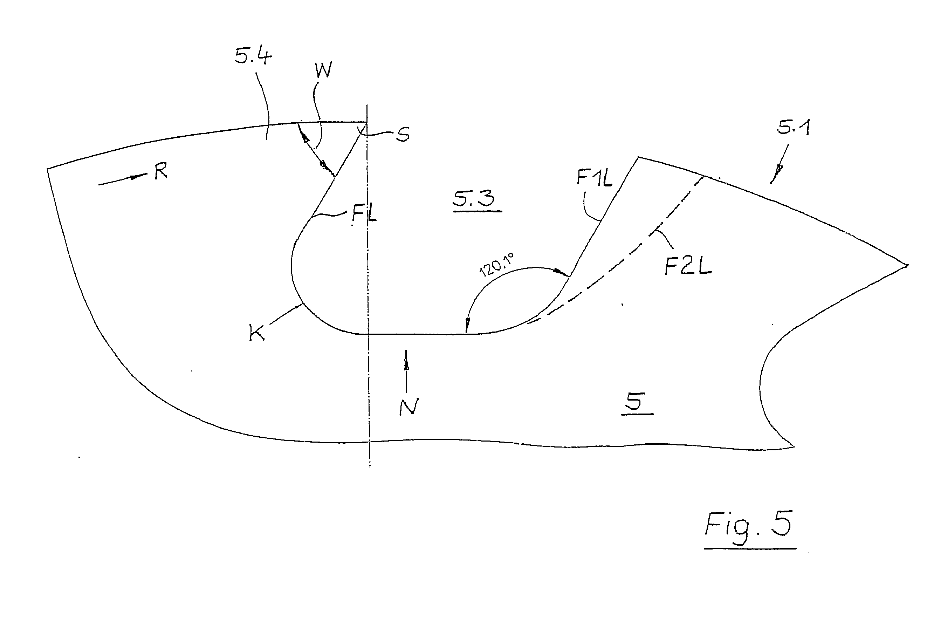

In den **Figuren 4a** bis **5** sind Ausführungsbeispiele für die Detailgestaltung der Schneidscheiben **5** und der Druckscheiben **6** sowie der in den Schneidscheiben **5** angeordneten Nuten gezeigt.
Nach **Fig. 5** bildet die in Umlaufrichtung **R, R'** nacheilende Flanke FL der in der Umfangsfläche **5.1** der Schneidscheiben **5** angeordneten Nuten **5.3** mit der Umfangsfläche **5.1** einen in Umlaufrichtung weisenden spitzwinkligen Haken **5.4,** wobei die an der Spitze **S** beginnende Nutflanke **FL** einen linearen sowie entgegen dem Walzendrehsinn **R, R'** gerichteten Verlauf und der daran anschließende Übergangsbereich **K** zum Nutfuß **N** und/oder der in Umlaufrichtung liegenden Nutflanke **F1L** oder **F2L**hin, bogenförmig ausgebildet ist.
Bevorzugt verlaufen die beiden Nutflanken **FL** und **F1L** zueinander parallel oder divergierend **FL, F2L.** Der Spitzenwinkel **W** des Hakens **5.4** ist vorzugsweise zwischen 45° und 80° gewählt.
In **Fig. 4a** ist der rechte Abschnitt der in **Fig. 3a** gezeigten zweiten, der hinteren Walze **4.2** dargestellt. Mit Pos. **4.5** ist der an diesem Endbereich vorgesehene Lager- und Antriebszapfen bezeichnet. Eine Schneidscheibe **5** ist beidseits von einer Druckscheibe **6** flankiert. In die jeweilige Umfangsfläche **6.1** bzw. **5.1** sind Nuten **6.3** bzw. **5.33** angeordnet, die deren Seitenflächen **6.2** bzw. **5.2** durchbrechen.
Eine Stirnansicht zu **Fig. 4a** ist in der **Fig. 4b** gezeigt, mit Sicht auf die Seitenfläche **6.2** und die Haken **5.4** der dahinter angeordneten Schneidscheibe **5.** In der **Fig. 4c** ist eine Stirnansicht von **Fig. 4a** gezeigt, bei der die Schneidscheibe **5** in der Wiedergabe des betrachteten Bauteiles weggelassen wurde, um die Ausformung der Nuten **6.3** in der Druckscheibe **6** besser zeigen zu können. Wie schematisch dargestellt, ist die Tiefe der Nuten **6.3** im Verhältnis zur Tiefe der Nuten **5.3** wesentlich geringer.

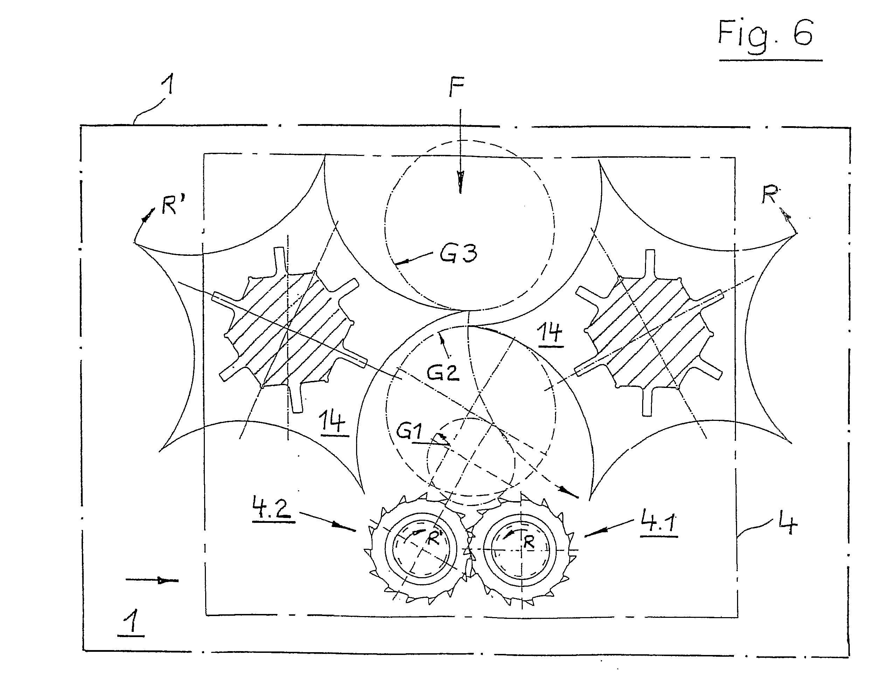

In der **Fig. 6** ist eine weitere Variante eines Separators gezeigt.
Dieser Separator **14** besitzt zwei, in Seiten-(Stirn-)ansicht gesehen, sternförmige Wellen, deren Drehsinn gleich den zugehörigen Walzen ist.

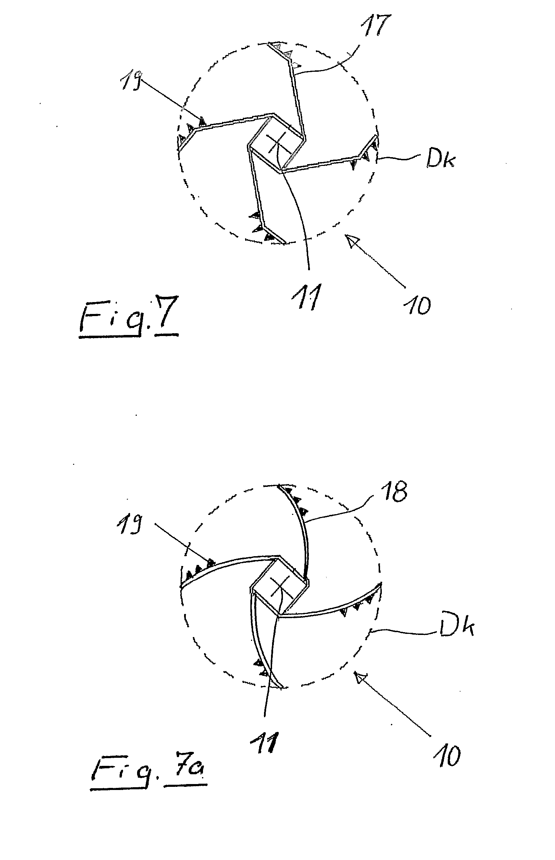

In der **Fig. 7** und **7a** sind weitere Varianten der Flügel des Separators **10** dargestellt. Ausgehend vom Zentrum, der Drehachse **11,** sind diese Flügel zu ihren freien Enden hin polygonzugartig **17** oder bogenförmig **18** geformt. Diese Ausführungen gewährleisten noch besser als die Grundvariante, dass die zugeführten Behälter, vor allem Behälter mit einem Volumen zwischen 0,25 Liter bis 3 Liter, einen optimalen Andruck in Richtung des Einzugspaltes der Schneid- und Presseinheit **4** erhalten. Wie aus diesen beiden Figuren noch ersichtlich ist, sind die Endbereiche der Flügel **17** bzw. **18** mit Stechelementen **19** besetzt. Die Spitze dieser Stechelemente **19** zeigt in Drehrichtung, also in Arbeitsrichtung. Durch diese Maßnahme wird das Halten und Zuführen der Behälter zum Einzugspalt der Schneid- und Presseinheit **4** hin noch verbessert. Insbesondere bei sehr dünnwandigen und sehr flexiblen Behältern kann es unter Umständen dazu kommen, dass die Flügelenden über einen derartigen Behälter hinweg rutschen könnten. Diese Stechelemente **19** wirken einem solchen Bestreben entgegen.

Bei der Ausführung nach der **Fig. 1** sind an der vorderen Seite **1.2** im Bereich der Einfüllöffnung Anschlussstutzen **15** vorgesehen. Selbige werden dort angebracht, falls die Vorrichtung an einen Flaschen- und/oder Dosenannahmeautomaten angekoppelt werden soll.
Alle in der vorstehenden Beschreibung erwähnten sowie die nur allein aus der Zeichnung entnehmbaren Merkmale sind weitere Bestandteile der Erfindung, auch wenn die nicht besonders hervorgehoben und insbesondere nicht in den Ansprüchen erwähnt sind.

**Bezugszeichenliste**

| | | | |
|---|---|---|---|
| 1 | Gehäuse | | |
| 1.1 | obere Seite (Fläche) | 1.2 | vordere Seite |
| 1.3 | untere Seite | 1.4 | hintere Seite |
| 2 | Einfüllöffnung | | |
| 3 | Auslassöffnung (Ausgangsöffnung) | | |
| 4 | Schneid- und Presseinheit | | |
| 4.1 | erste Walze (vordere) | 4.2 | zweite Walze (hintere) |
| 4.3 | Kerndurchmesser | 4.4 | Lagerzapfen |
| 4.5 | Lager- und Antriebszapfen | 4.6 | Abstreifer |
| 5 | Schneidscheiben | | |
| 5.1 | Umfangsflächen | 5.2 | Seitenflächen |
| 5.3, 5.33 | Nuten | 5.4 | Haken |
| 6 | Druckscheiben | | |
| 6.1 | Umfangsfläche | 6.2 | Seitenfläche |
| 6.3 | Nuten | | |
| 7 | Austritt | 8 | Lagerplatten |
| 9 | Rutsche | 10 | Separator |
| 11 | Drehachse von Pos. 10 | 12 | Flügel |
| 13 | Rahmenteil (Begrenzung des Aufnahmeraumes nach hinten) | | |
| 14 | Separator (Selektierer) | | |
| 15 | Anschlussstutzen | 16 | Schnittspiel |
| 17 | Flügel, polygonzugartig | 18 | Flügel, bogenförmig |
| 19 | Stechelemente (Spitzschrauben, Nägel o. dgl. Teil) | | |
| A1 | Drehachse der Walze 4.1 | | |
| A2 | Drehachse der Walze 4.2 | | |
| B1 | Breite von Pos. 6 | B2 | Breite von Pos. 5 |
| B3 | Breite der Einstiche | | |
| D1 | Durchmesser der Abschnitte S1 (äußerer Durchmesser) | | |
| D2 | Durchmesser der Abschnitte S2 (äußerer Durchmesser) | | |
| Dk | Umfangskreis der Flügel gem. Fig. 1 | | |
| E | Einstiche | | |
| F | Förderrichtung | | |
| FL | Flanke | | |
| F1L | Flanke | | |
| F2L | Flanke | | |
| N | Nutfuß | | |
| K | Übergangsbereich | | |
| W | Spitzenwinkel | | |
| G1, G2, G3 | Behälter, mit verschiedenem Durchmesser | | |
| S | Spitze von Pos.5. 4 | | |
| S1 | Abschnitte | | |
| S2 | Abschnitte | | |
| L1 | Länge der Abschnitte S1 | | |
| L2 | Länge der Abschnitte S2 | | |
| R | Rotationsrichtung (Drehrichtung) | | |
| R' | Rotationsrichtung (Drehrichtung) | | |

## Patentansprüche

1. Vorrichtung zum Zusammendrücken leerer Behälter, insbesondere Getränkeflaschen oder -dosen aus Kunststoff, insbesondere aus PET, oder Weißblech, umfassend
• ein Gehäuse (1), mit einer Einfüllöffnung (2) sowie einer Ausgangsöffnung (3), und
• eine im Gehäuse (1) angeordnete Schneid- und Presseinheit (4) sowie
• Mittel zum Antrieb und zur Steuerung der Schneid- und Presseinheit (4), wobei
• die Schneid- und Presseinheit (4) wenigstens zwei, bezüglich ihren Drehachsen zueinander beabstandet angeordnete Walzen (4.1 und 4.2) enthält,
***dadurch gekennzeichnet,***
**dass**
• jede der Walzen (4.1 und 4.2), in Längsrichtung ihrer Drehachse (A1; A2) gesehen, zwei Arten von mehreren Abschnitten (S1 und S2) aufweist, wobei
• nacheinander im Wechsel folgende Abschnitte (S1 und S2) jeweils einen anderen äußeren Durchmesser (D1; D2) besitzen, und,
• im montierten Zustand der beiden Walzen (4.1 und 4.2), wenigstens die den größeren äußeren Durchmesser (D2) aufweisenden Abschnitte (S2) zueinander versetzt und mit ihren Umfangsflächen teilweise kämmend /überlappend nebeneinander angeordnet sind und somit jeweils eine Schneidscheibe (5) bilden, deren Umfangsflächen (5.1) jeweils wenigstens eine Nut besitzt, und
die den kleineren äußeren Durchmesser (D1) aufweisenden Abschnitte (S1) mehrere radial nach innen gerichtete, bis zu einem Kerndurchmesser (4.3) reichende Einstiche (E) besitzen derart, dass mehrere Druckscheiben (6) gebildet sind, die jeweils mit der Breite (B3) des Einstiches (E) zueinander beabstandet sind.

2. Vorrichtung nach Anspruch 1,
***dadurch gekennzeichnet, dass***
die Länge (L2) der Abschnitte (S2) mit dem größeren äußeren Durchmesser (D2) geringer ist, als die Länge (L1) der Abschnitte (S1), die den kleineren äußeren Durchmesser (D1) besitzen.

3. Vorrichtung nach wenigstens einem der vorhergehenden Ansprüche,
***dadurch gekennzeichnet, dass***
das so genannte Schnittspiel (16) zwischen benachbarten Scheiben (6 oder 5 und 6) einen Wert zwischen 0,2 mm und 2 mm hat.

4. Vorrichtung nach wenigstens einem der vorhergehenden Ansprüche,
***dadurch gekennzeichnet, dass***
die Überlappung benachbarter und gegenüber liegender Scheiben einen Wert zwischen 0,5 mm und 2,5 mm hat, bevorzugt 10 % der Breite einer Scheibe (5 bzw. 6).

5. Vorrichtung nach wenigstens einem der vorhergehenden Ansprüche,
***dadurch gekennzeichnet, dass***
die Walzen bevorzugt aus dem Werkstoff 42CrMoS4 bestehen.

6. Vorrichtung nach wenigstens einem der vorhergehenden Ansprüche,
***dadurch gekennzeichnet, dass***
die Scheiben der Walzen (4.1 und 4.2) gehärtet sind und max. eine Härte von 55 HRc besitzen.

7. Vorrichtung nach wenigstens einem der vorhergehenden Ansprüche,
***dadurch gekennzeichnet, dass***
die Lager der Walzen (4.1 und 4.2) von außen aus in die Lagerplatten (8) eingesetzt sind.

8. Vorrichtung nach wenigstens einem der vorhergehenden Ansprüche,
***dadurch gekennzeichnet, dass***
der Durchmesser (D2) der Abschnitte (S2) vorzugsweise 79 mm, der Durchmesser (D1) der kleineren Abschnitte (S1) 70 mm und der Kerndurchmesser (4.3) der Walzen (4.1 und 4.2) 50 mm beträgt.

9. Vorrichtung nach wenigstens einem der vorhergehenden Ansprüche,
***dadurch gekennzeichnet, dass***
die Drehzahl der Walzen vorzugsweise 60 U/min ist.

10. Vorrichtung nach wenigstens einem der vorhergehenden Ansprüche,
***dadurch gekennzeichnet, dass***
die Schneidscheiben (5) in deren Umfangsfläche (5.1) eingearbeitete Nuten (5.3) aufweisen, deren in Umlaufrichtung (R, R') nacheilende Flanke (FL) mit der Umfangsfläche (5.1) einen in Umlaufrichtung weisenden spitzwinkligen Haken (5.4) bildet, wobei die an der Spitze (S) beginnende Nutflanke (FL) einen linearen sowie entgegen dem Walzendrehsinn (R, R') und der daran anschließende Übergangsbereich (K) zum Nutfuß (N) und/oder der in Umlaufrichtung liegenden Nutflanke (FL1) hin, bogenförmig ausgebildet ist.

11. Vorrichtung nach wenigstens einem der vorhergehenden Ansprüche,
***dadurch gekennzeichnet, dass***
die beiden Nutflanken (FL und F1L) zueinander parallel oder divergierend (FL, F2L) verlaufen.

12. Vorrichtung nach wenigstens einem der vorhergehenden Ansprüche,
***dadurch gekennzeichnet, dass***
das der Spitzenwinkel (W) des Hakens (5.4) vorzugsweise zwischen 45° und 80° gewählt ist.

13. Vorrichtung nach wenigstens einem der vorhergehenden Ansprüche,
***dadurch gekennzeichnet, dass***
der Schneid- und Presseinheit (4) ein Separator / Selektierer (10) vorgelagert ist.

14. Vorrichtung nach Anspruch 13,
***dadurch gekennzeichnet, dass***
der Separator / Selektierer (10) eine Flügelwelle ist, die vorzugsweise drei oder vier Flügel (12) besitzt, deren freie Flügelenden in Drehrichtung (R') gesehen nacheilen.

15. Vorrichtung nach Anspruch 14,
***dadurch gekennzeichnet, dass***
die im Zentrum, d.h. an der Drehachse (11) befestigten Flügel zu ihren freien Enden hin polygonzugartig (17) oder bogenförmig (18) gestaltet sind.

16. Vorrichtung nach Anspruch 13,
***dadurch gekennzeichnet, dass***
der Separator / Selektierer (10), in Seiten-(Stirn-) Ansicht gesehen, aus zwei Sternform-Wellen besteht.

17. Vorrichtung nach Anspruch 13, 14, 15 oder 16,
***dadurch gekennzeichnet, dass***
an den die zugeführten Behälter zeitweise kontaktierenden Flächenabschnitten des Separators (10) in Drehrichtung (R') zeigende Stechelemente (21) angeordnet sind

18. Vorrichtung nach wenigstens einem der vorhergehenden Ansprüche
***dadurch gekennzeichnet, dass***
die Vorrichtung an Flaschen- und/oder Dosenannahmeautomaten ankoppelbar bzw. mit solchen Geräten kombinierbar ist.

19. Verfahren zum Zusammendrücken leerer Behälter, insbesondere Getränkeflaschen oder -dosen aus Kunststoff, insbesondere aus PET, oder Weißblech unter Verwendung einer Vorrichtung nach wenigstens einem der Patentansprüche 1 bis 18,
***dadurch gekennzeichnet, dass***
zugeführte Behälter in Teilbereichen durch den ieweils einen Abschnitt (S2) derart perforiert/eingeschnitten werden, so dass einige der aneinander gepressten und eingeschnittenen Wandabschnitte eines Behälters bei dem abschnittsweisen Durchtrennen des verflachten Materials in der Schneid- und Presseinheit miteinander verhaken, und durch den jeweils weiteren, axial neben dem ersten Abschnitt (S2) angeordneten anderen Abschnitt (S1) der Walzen (4.1 und 4.2) die zu den perforierten Teilbereichen benachbarten Bereiche des Behälters zeitgleich zusammengedrückt werden und somit die Behälter kompaktiert zu einer plattenartigen Form/Gestalt die Ausgangsöffnung (3) der Vorrichtung verlassen.

20. Verfahren nach Anspruch 19,
***dadurch gekennzeichnet, dass***
das Verhaken quasi in der Endphase eines solchen Schnittes erfolgt.

21. Verfahren nach Anspruch 19,
***dadurch gekennzeichnet, dass***
das Verhaken unmittelbar, also mit Voranschreiten eines solchen Schnittes erfolgt.

## Claims

1. Device for compressing empty containers, particularly beverage bottles or cans of plastics material, particularly of PET, or tinned metal, comprising
- a housing (1) with a filler opening (2) as well as an outlet opening (3),
- a cutting and pressing unit (4) arranged in the housing (1) and
- means for driving and controlling the cutting and pressing unit (4), wherein
- the cutting and pressing unit (4) includes at least two rollers (4.1 and 4.2) arranged at a spacing from one another with respect to the axes of rotation thereof,
**characterised in that**
- each of the rollers (4.1 and 4.2) has as seen in the length direction of the axes (A1; A2) of rotation thereof two forms of several sections (S1 and S2), wherein
- sections (S1 and S2) following successively in alternation respectively have different outer diameters (D1; D2) and
- in the mounted state of the two rollers (4.1 and 4.2) at least the sections (S2) having the larger outer diameter (D2) are offset relative to one another and arranged with the circumferential surfaces thereof adjacent to one another and partly meshing/overlapping and thus in each instance form a cutting disc (5), the circumferential surfaces (5.1) of the discs each having a groove, and the sections (S1) having the smaller outer diameter (D1) have several radially inwardly directed recesses (E) extending to a core diameter (4.3) in such a manner that several pressure discs (6) respectively spaced apart by the width (B3) of the recess (E) are formed.

2. Device according to claim 1, **characterised in that** the length (L2) of the sections (S2) with the larger outer diameter (D2) is less than the length (L1) of the sections (S1) having the smaller outer diameter (D1).

3. Device according to at least one of the preceding claims, **characterised in that** the so-termed cutting play (16) between adjacent discs (6 or 5 and 6) has a value between 0.2 millimetres and 2 millimetres.

4. Device according to any least one of the preceding claims, **characterised in that** the overlap of adjacent and opposite discs has a value between 0.5 millimetres and 2.5 millimetres, preferably 10% of the width of a disc (5 or 6).

5. Device according to at least one of the preceding claims, **characterised in that** the rollers preferably consist of the material 42CrMoS4.

6. Device according to at least one of the preceding claims, **characterised in that** the discs of the rollers (4.1 and 4.2) are hardened and have a maximum hardness of 55 HRc.

7. Device according to at least one of the preceding claims, **characterised in that** the bearings of the rollers (4.1 and 4.2) are inserted from the outside into the bearing plates (8).

8. Device according to at least one of the preceding claims, **characterised in that** the diameter (D2) of the sections (S2) is preferably 79 millimetres, the diameter (D1) of the smaller sections (S1) 70 millimetres and the core diameter (4.3) of the rollers (4.1 and 4.2) 50 millimetres.

9. Device according to at least one of the preceding claims, **characterised in that** the rotational speed of the rollers is preferably 60 rpm.

10. Device according to at least one of the preceding claims, **characterised in that** the cutting discs (5) have grooves (5.3), which are formed in the circumferential surface (5.1) thereof and the flank (FL) of which trailing in rotational direction (R, R') forms together with the circumferential surface (5.1) an acute-angled hook (5.4) pointing in rotational direction, wherein the groove flank (FL) beginning at the tip (S) runs linearly as well as against the roller sense of rotation (R, R') and the transition region (K), which adjoins thereat, to the groove foot (N) and/or towards the groove flank (FL1) lying in circumferential direction is or are formed to be curved.

11. Device according to at least one of the preceding claims, **characterised in that** the two groove flanks (FL and F1 L) extend parallelly to one another or divergently from one another (FL, F2L).

12. Device according to at least one of the preceding claims, **characterised in that** the acute angle (W) of the hook (5, 4) is preferably selected to be between 45° and 80°.

13. Device according to at least one of the preceding claims, **characterised in that** a separator/selector (10) is mounted upstream of the cutting and pressing unit (4).

14. Device according to claim 13, **characterised in that** the separator/selector (10) is a finned shaft, which preferably has three or four fins (12), the free fin ends of which trail as seen in rotational direction (R').

15. Device according to claim 14, **characterised in that** the fins, which are fastened in the centre, i.e. at the rotational axis (11), are formed to have a polygonal course (17) or to be curved (18) towards the free ends thereof.

16. Device according to claim 13, **characterised in that** the separator/selector (10) consists of two star-shaped shafts as seen in side (end) view.

17. Device according to claim 13, 14, 15 or 16, **characterised in that** puncturing elements (19) pointing in rotational direction (R') are arranged at those surface sections of the separator (10) periodically contacting the supplied containers.

18. Device according to at least one of the preceding claims, **characterised in that** the device can be coupled with bottle and/or can receiving machines or be combined with such apparatus.

19. Method for compressing empty containers, particularly beverage bottles or cans, of plastics material, particularly of PET, or tinned metal with use of a device according to at least one of claims 1 to 18, **characterised in that** supplied containers are so perforated/cut-into in sub-regions by the respective section (S) that some of the wall sections, which are pressed against one another and cut into, of a container hook together during the section-wise parting of the flattened material in the cutting and pressing unit and the regions, which are adjacent to the perforated sub-regions, of the container are simultaneously compressed by the respective further section (S1), which is arranged axially adjacent to the first section (S2), of the rollers (4.1 and 4.2) and thus the containers leave the outlet opening (3) of the device compacted into a plate-like form/shape.

20. Method according to claim 19, **characterised in that** the hooking takes place quasi in the end phase of such a cut.

21. Method according to claim 19, **characterised in that** the hooking takes place directly, thus with progression of, such a cut.

## Revendications

1. Dispositif pour comprimer des récipients vides, en particulier des bouteilles ou canettes pour boissons en matière plastique, en particulier en polyéthylène-téréphtalate, ou en fer-blanc, comprenant
- un carter (1), avec une ouverture de remplissage (2) et une ouverture de sortie (3),
- et une unité (4) de découpe et de compression disposée dans le carter (1),
- ainsi que des moyens pour entraîner et commander l'unité (4) de découpe et de compression,
- sachant que l'unité (4) de découpe et de compression contient au moins deux cylindres (4.1 et 4.2) dont les axes de rotation sont disposés à distance entre eux,
**caractérisé en ce que**
- chacun des cylindres (4.1 et 4.2) présente, considéré dans la direction longitudinale de son axe de rotation (A1 ; A2), plusieurs sections de deux types (S1 et S2),
- sachant que les sections (S1 et S2) qui se succèdent alternativement possèdent un diamètre extérieur respectif différent (D1 ; D2),
- et sachant que, dans l'état monté des deux cylindres (4.1 et 4.2), au moins les sections (S2) qui présentent le plus grand diamètre extérieur (D2) sont disposées en juxtaposition en étant mutuellement décalées et en se chevauchant en prise partielle par leurs surfaces périphériques, et forment ainsi un disque de coupe respectif (5) dont la surface périphérique respective (5.1) possède au moins une rainure,
et sachant que les sections (S1) qui présentent le plus petit diamètre extérieur (D1) possèdent plusieurs encoches (E) orientées radialement vers l'extérieur et s'étendant jusqu'à un diamètre d'âme (4.3), de telle sorte que sont formés plusieurs disques de compression (6) qui sont respectivement distants entre eux de la largeur (B3) de l'encoche (E).

2. Dispositif selon la revendication 1, **caractérisé en ce que** la longueur (L2) des sections (S2) ayant le plus grand diamètre extérieur (D2) est inférieur à la longueur (L1) des sections (S1) qui présentent le plus petit diamètre extérieur (D1).

3. Dispositif selon au moins une des revendications précédentes, **caractérisé en ce que** le «jeu de coupe » (16) entre des disques voisins (6 ou 5 et 6) possède une valeur comprise entre 0,2 mm et 2 mm.

4. Dispositif selon au moins une des revendications précédentes, **caractérisé en ce que** le chevauchement de disques voisins et placés en vis-à-vis possède une valeur comprise entre 0,5 mm et 2,5 mm, de préférence égale à 10% de la largeur d'un disque (5 et/ou 6).

5. Dispositif selon au moins une des revendications précédentes, **caractérisé en ce que** les cylindres sont de préférence constitués du matériau 42CrMoS4.

6. Dispositif selon au moins une des revendications précédentes, **caractérisé en ce que** les disques des cylindres (4.1 et 4.2) sont durcis et possèdent une dureté maximale de 55 HRc.

7. Dispositif selon au moins une des revendications précédentes, **caractérisé en ce que** les paliers des cylindres (4.1 et 4.2) sont insérés de l'extérieur dans les plaques de palier (8).

8. Dispositif selon au moins une des revendications précédentes, **caractérisé en ce que** le diamètre (D2) des sections (S2) est de préférence égal à 79 mm, le diamètre (D1) des sections plus petites (S1) à 70 mm et le diamètre d'âme (4.3) des cylindres (4.1 et 4.2) à 50 mm.

9. Dispositif selon au moins une des revendications précédentes, **caractérisé en ce que** la vitesse de rotation des cylindres est de préférence égale à 60 tr/min.

10. Dispositif selon au moins une des revendications précédentes, **caractérisé en ce que** les disques de coupe (5) présentent des rainures (5.3), pratiquées dans leur surface périphérique (5.1), dont le flanc (FL) postérieur dans la direction de rotation (R, R') forme avec la surface périphérique (5.1) une griffe pointue (5.4) dirigée dans la direction de rotation, sachant que le flanc de rainure (FL) commençant au sommet (S) possède une allure linéaire et dirigée à l'encontre du sens de rotation (R, R') des cylindres, et la région de transition consécutive (K) vers le fond de rainure (N) et/ou le flanc de rainure (FL1) situé dans la direction de rotation est réalisée incurvée.

11. Dispositif selon au moins une des revendications précédentes, **caractérisé en ce que** les deux flancs de rainure (FL et F1L) s'étendent avec des allures mutuellement parallèles ou divergentes (FL, F2L).

12. Dispositif selon au moins une des revendications précédentes, **caractérisé en ce que** l'angle au sommet (W) de la griffe (5.4) est de préférence choisi entre 45° et 80°.

13. Dispositif selon au moins une des revendications précédentes, **caractérisé en ce que** l'unité (4) de découpe et de compression est précédée d'un séparateur/sélectionneur (10).

14. Dispositif selon la revendication 13, **caractérisé en ce que** le séparateur/sélectionneur (10) est un arbre à pales qui possède de préférence trois ou quatre pales (12) dont les extrémités libres sont postérieures, considéré dans la direction de rotation (R').

15. Dispositif selon la revendication 14, **caractérisé en ce que** les pales fixées au centre, c'est-à-dire sur l'axe de rotation (11), sont réalisées avec un tracé polygonal (17) ou incurvées (18) en direction de leurs extrémités libres.

16. Dispositif selon la revendication 13, **caractérisé en ce que** le séparateur/sélectionneur (10) est constitué, considéré en vue de côté (frontale), de deux arbres en forme d'étoile.

17. Dispositif selon la revendication 13, 14, 15 ou 16, **caractérisé en ce que** des éléments formant des piques (19) dirigées dans la direction de rotation (R') sont disposés sur les parties de surfaces du séparateur (10) qui entrent périodiquement en contact avec les récipients apportés.

18. Dispositif selon au moins une des revendications précédentes, **caractérisé en ce que** le dispositif peut être accouplé à des appareils automatiques de collecte de bouteilles et/ou de canettes, ou combiné à de tels appareils.

19. Procédé pour comprimer des récipients vides, en particulier des bouteilles ou canettes pour boissons en matière plastique, en particulier en polyéthylène-téréphtalate, ou en fer-blanc, en utilisant un dispositif selon au moins une des revendications 1 à 18, **caractérisé en ce que** des récipients apportés sont, dans des régions partielles, perforés/entaillés par la section respective (S2) de telle sorte que certaines des parties de paroi d'un récipient pressées les unes contre les autres et entaillées s'accrochent entre elles lors du sectionnement sectoriel du matériau aplati dans l'unité de découpe et de compression, et **en ce que**, par l'autre partie respective (S1) des cylindres (4.1 et 4.2), axialement juxtaposée à la première partie (S2), les régions du récipient qui sont voisines des régions partielles perforées sont dans le même temps comprimées, de sorte que les récipients quittent l'ouverture de sortie (3) du dispositif en étant compactés en une forme/configuration du genre plaque.

20. Procédé selon la revendication 19, **caractérisé en ce que** l'accrochage s'effectue quasiment dans la phase finale d'une telle découpe.

21. Procédé selon la revendication 19, **caractérisé en ce que** l'accrochage s'effectue immédiatement, donc avec la progression d'une telle découpe.
